# EUROPEAN PATENT APPLICATION

(11) **EP 2 551 747 A2**
(43) Date of publication of application: **30.01.2013**
(21) Application number: 12000144.1
(22) Date of filing: 11.01.2012
(51) Int. Cl.: G06F 1/32

(54) **Power saving method and touch display apparatus**

(30) Priority: 29.07.2011 TW 100127074
(71) Applicant: ACER Inc., Hsichih Tapei Hsien 221 (TW)
(72) Inventor: Chang, Yi-Wei, 221 Tapei Hsien (TW)
(74) Representative: Altenburg, Bernardus Stephanus Franciscus

(57) **Abstract**

A power saving method is disclosed. The method is used for reducing the amount of power consumed by a touch display apparatus(1) including a sensing area(11). The method includes: determining whether an instruction event happens in the sensing area(11) by scanning the sensing area(11) within a first processing period; in response to a negative determination, providing a specific sensing area(21) within the sensing area(11); determining whether the instruction event happens in the specific sensing area(21) by scanning the specific sensing area(21) within a second processing period; and in response to a negative determination, ending the scanning of the sensing area(11).

## Description

### BACKGROUND OF THE INVENTION

### Field of the Invention

The present invention relates to a power saving method and a touch display apparatus; more particularly, the present invention relates to a power saving method and a touch display apparatus saving power by means of decreasing the range to be scanned.

### Description of the Related Art

Along with the fast development of technology and the gradual change of life habits, various electronic products such as mobile phones, personal digital assistants, and tablet computers appear in daily life, and the electricity consumed by such products has long been an issue of great concern. In many of these products, the power consumed by touch panels accounts for a significant proportion of the overall amount. As a result, it is more efficient to start from touch panels if we want to reduce the amount of power consumed.

Prior art U.S. Pat. No. 20080162996 disclosed a system and a method for autonomously scanning a sensor panel device. In an embodiment, the system and method disable a sensor panel processor after a first predetermined amount of time has elapsed without the sensor panel device sensing any events. While the processor is disabled, the sensor panel device can periodically and autonomously scan the sensor panel for touch activity. That solution cannot save much power because it is still necessary to scan the entire area of the sensor panel.

For the above reason, there is a need to provide a power saving method and a touch display apparatus to mitigate and/or obviate the aforementioned problem.

### SUMMARY OF THE INVENTION

The present invention presents a power saving method for reducing the amount of power consumed by a touch display apparatus.

The present invention is also related to a touch display apparatus capable of reducing the amount of power consumed.

According to one embodiment of the present invention, the power saving method is used on a display apparatus comprising a sensing area. The method of the present invention includes: determining whether an instruction event happens in the sensing area by scanning the sensing area within a first processing period with a scanning module; in response to a negative determination, providing a specific sensing area within the sensing area; determining whether the instruction event happens in the specific sensing area by scanning the specific sensing area within a second processing period with the scanning module; and in response to a negative determination, ending the scanning of the sensing area.

Other objects, advantages, and novel features of the invention will become more apparent from the following detailed description when taken in conjunction with the accompanying drawings.

### BRIEF DESCRIPTION OF THE DRAWINGS

These and other objects and advantages of the present invention will become apparent from the following description of the accompanying drawings, which disclose several embodiments of the present invention. It is to be understood that the drawings are to be used for purposes of illustration only, and not as a definition of the invention.

In the drawings, wherein similar reference numerals denote similar elements throughout the several views:
FIG. 1 is a structural drawing of a touch display apparatus according to one embodiment of the invention.
FIG. 2 is a flow diagram illustrating a process of a power saving method according to one embodiment of the invention.
FIG. 3 illustrates an exemplary sensing area according to one embodiment of the invention.
FIG. 4 illustrates an exemplary specific sensing area according to one embodiment of the invention.

### DETAILED DESCRIPTION OF THE PREFERRED EMBODIMENT

To enable persons skilled in the art to gain insight into the technical contents of the present invention, the present invention is hereunder illustrated with preferred embodiments and accompanying drawings.

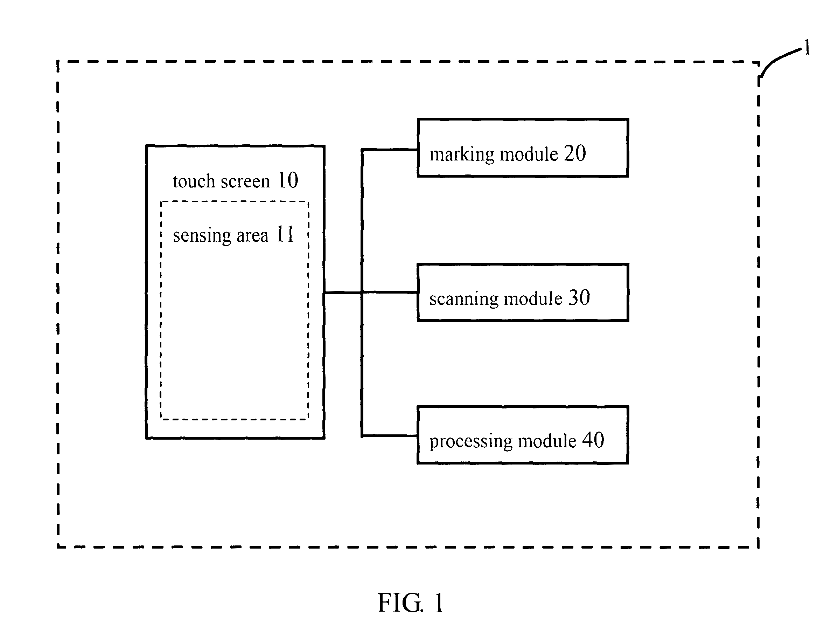

Please refer to FIG. 1, which illustrates a structural drawing of the touch display apparatus according to the present invention. The touch display apparatus 1 of the present invention includes a touch screen 10, a marking module 20, a scanning module 30, and a processing module 40, wherein the touch screen 10 includes a sensing area 11. In an embodiment of the present invention, the aforesaid elements can come in the form of a hardware device, a software program, firmware, or a combination thereof, they can also come in the form of a circuit loop or any other appropriate arrangement. If any one of the elements is implemented by software, it can be loaded on a computer-readable storage medium. Each of the elements can be self-contained; alternatively, the elements can operate in conjunction with each other.

In one embodiment of the present invention, the touch display apparatus 1 is a smart phone comprising the touch screen 10 and aforesaid modules, but the disclosure of the present invention is not limited thereto; it also can be a tablet computer or a notebook. In one embodiment of the present invention, the range of the sensing area 11 includes the entire area of the touch screen 10, though the disclosure of the present invention is not limited thereto.

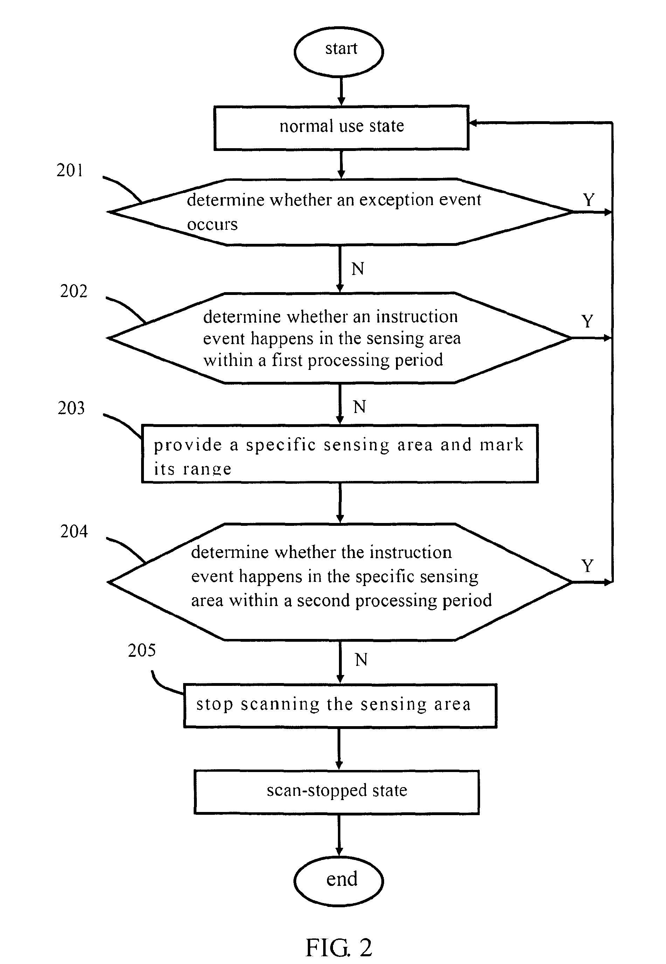

Please refer to FIG. 2, which illustrates a flowchart of the power saving method according to the present invention. Please also refer to FIG. 1, FIG. 3, and FIG. 4, which illustrate one embodiment of the present invention. Although the power saving method of the present invention is illustrated with the touch display apparatus 1 shown in FIG. 1, the power saving method of the present invention is not limited to application to the touch display apparatus 1.

Step 201: determine whether an exception event occurs.

In one embodiment of the present invention, the processing module 40 determines whether or not an exception event occurs in the touch display apparatus 1, and in the event that the determining process yields "NO", the flow proceeds to step 202; in the event that the determining process yields "YES", the touch display apparatus 1 returns to a normal use state.

While the touch display apparatus 1 conducts an exception event such as displaying a video, displaying a document, displaying a picture, or displaying a webpage, the touch display apparatus 1 and the touch screen 10 are in use. The touch display apparatus 1 is not idle; as a consequence, it is not necessary to proceed to the next step. In one embodiment of the present invention, the exception event is one of a set of a video displaying event, a document displaying event, a picture displaying event, and a webpage displaying event, though the disclosure of the present invention is not limited thereto.

Please note that step 201 and the processing module 40 are not necessary in the present invention. According to one embodiment of the present invention, the power saving method can skip step 201 and execute the following steps directly. The way to determine whether or not an exception event occurs is a known technique; therefore, there is no need for further description.

If it is determined that no exception event is occurs, the process will go to step 202: determine whether an instruction event happens in the sensing area within a first processing period.

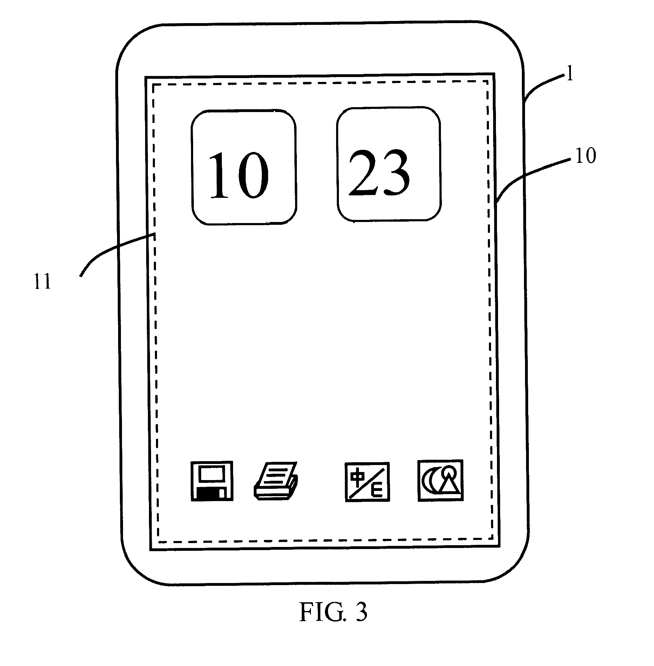

Please refer to FIG. 3, which illustrates an exemplary sensing area according to the present invention. The touch display apparatus 1 includes a touch screen 10, and the range of the sensing area 11 includes the entire area of the touch screen 10. The scanning module 30 can determine whether or not an instruction event happens in the sensing area 11 by scanning the sensing area 11. Generally speaking, if no special setting has been determined, the scanning module 30 scans the entire sensing area 11 continuously to determine whether or not an instruction event happens in the sensing area 11. However, scanning the entire sensing area 11 consumes unnecessary electricity if the touch screen 10 is not in use. Accordingly, the present invention proposes a power saving method to prevent such waste.

In one embodiment of the present invention, if it has been determined that no exception event is occurs, the scanning module 30 scans the sensing area 11 within a first processing period to determine whether or not an instruction event happens in the sensing area 11. In the event that the determining process yields "NO", the flow proceeds to step 203, and in the event that the determining process yields "YES", the touch display apparatus 1 returns to the normal use state.

In one embodiment of the present invention, the length of the first processing period is 2 minutes, though the disclosure of the present invention is not limited thereto. If no instruction event happens within the first processing period, a judgment will be made that the touch display apparatus 1 and the touch screen 10 are probably not in use, and the following steps will be executed. Please note that the length of the first processing period can be set by users in advance or by the touch display apparatus 1 directly. In one embodiment of the present invention, the instruction event is a touch event near or on the touch screen 10, though the disclosure of the present invention is not limited thereto. Also please note that the way to determine whether or not an instruction event happens is a known technique in the field; therefore, there is no need for further description.

If it is determined that no instruction event happens in the sensing area within the first processing period, the process will go to step 203: provide a specific sensing area and mark its range.

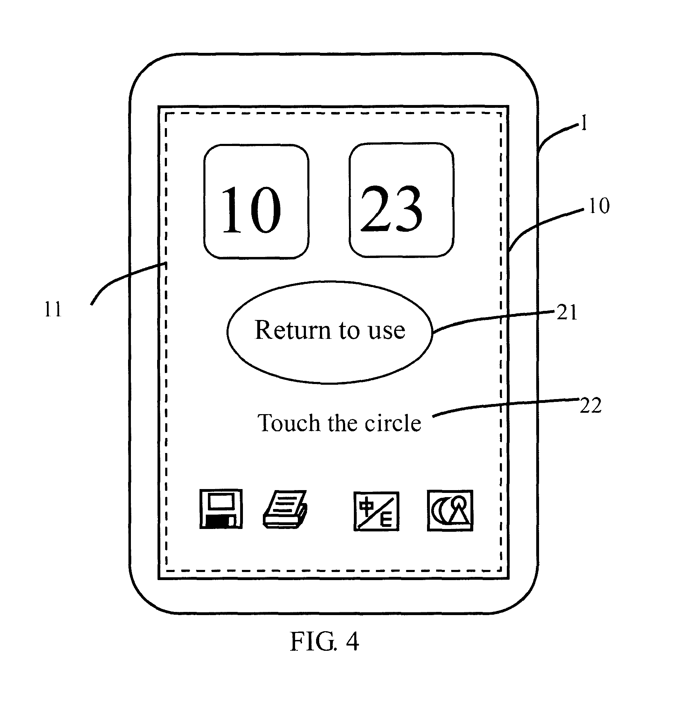

Please refer to FIG. 4, which illustrates an exemplary specific sensing area according to the present invention. If no instruction event happens in the sensing area 11 within the first processing period, the marking module 20 marks a specific sensing area 21 on the touch screen 10, wherein the specific sensing area 21 falls within the sensing area 11.

As shown in FIG. 4, the marking module 20 can mark the range of the specific sensing area 21 with a picture, though the disclosure of the present invention is not limited thereto; the marking module 20 can also mark the specific sensing area 21 with a message. Furthermore, in order to remind users to touch the specific sensing area 21, the marking module 20 can display a predetermined picture or message 22 on the sensing area 11 after the first processing period. Please note that the location of the specific sensing area 21 can be set by users in advance or by the touch display apparatus 1 directly; moreover, the step of displaying a predetermined picture or message is not necessary in the present invention.

Step 204: determine whether the instruction event happens in the specific sensing area within a second processing period.

Please refer to FIG. 4; after marking the range of the specific sensing area 21, the scanning module 30 scans the specific sensing area 21 within a second processing period to determine whether or not an instruction event happens in the specific sensing area 21. In the event that the determining process yields "NO", the flow proceeds to step 205, and in the event that the determining process yields "YES", the touch display apparatus 1 returns to the normal use state.

In one embodiment of the present invention, the length of the second processing period is 8 minutes, though the disclosure of the present invention is not limited thereto. If no instruction event happens in the specific sensing area 21 within the second processing period, a judgment will be made that the touch display apparatus 1 and the touch screen 10 are indeed not in use, and the following steps will be executed. Please note that the length of the second processing period can be set by users in advance or by the touch display apparatus 1 directly.

In one embodiment of the present invention, the scanning module 30 scans only the specific sensing area 21 within the second processing time, and it does not scan areas other than the specific sensing area 21. Compared with scanning the entire sensing area 11, scanning only the specific sensing area 21 can reduce the amount of electricity consumed. If the user touches the specific sensing area 21, the touch display apparatus 1 will return to the normal use state; however, if the user touches areas other than the specific sensing area 21, there will be no reaction. After returning to the normal use state, the touch display apparatus 1 repeats the steps of the power saving method. For example, the scanning module 30 determines whether or not the instruction event happens in the sensing area within the first processing period by scanning the sensing area 11. Please note that the way to determine whether or not an instruction event happens is a known technique in the field; therefore, there is no need for further description.

If it is determined that no instruction event happens in the specific sensing area within the second processing period, the process will go to step 205: stop scanning the sensing area.

If the scanning module 30 makes a judgment that no instruction event happens in the specific sensing area 21 within the second processing period, the scanning module 30 will stop scanning the sensing area 11 and the touch display apparatus 1 will enter a scan-stopped state. Compared with scanning the entire sensing area 11 within the first processing period and within the second processing period, scanning only the specific sensing area 21 within the second processing period can reduce the amount of electricity consumed.

Although the present invention has been explained in relation to its preferred embodiments, it is to be understood that many other possible modifications and variations can be made without departing from the spirit and scope of the invention as hereinafter claimed.

## Claims

1. A power saving method for reducing the amount of power consumed by a touch display apparatus(1), wherein the touch display apparatus(1) comprises a sensing area(11), the power saving method comprising the following steps:
determining whether an instruction event happens in the sensing area(11) by scanning the sensing area(11) within a first processing period;
when it is determined that no instruction event happens in the sensing area(11) within the first processing period,
providing a specific sensing area(21) within the sensing area(11);
determining whether the instruction event happens in the specific sensing area(21) by scanning the specific sensing area(21) within a second processing period; and
when it is determined that no instruction event happens in the specific sensing area(21) within the second processing period, ending the scanning of the sensing area(11).

2. The power saving method as claimed in claim 1, further comprising:
when it is determined that the instruction event happens in the specific sensing area(21) within the second processing period, determining whether the instruction event happens in the sensing area(11) by scanning the sensing area(11) within the first processing period.

3. The power saving method as claimed in claim 1 or 2, further comprising:
marking the range of the specific sensing area(21).

4. The power saving method as claimed in claim 1 or 2, further comprising:
determining whether an exception event occurs; and
when it is determined that no exception event occurs, determining whether the instruction event happens in the sensing area(11) by scanning the sensing area(11) within the first processing period.

5. The power saving method as claimed in claim 4, wherein the exception event is one of a set of a video displaying event, a document displaying event, a picture displaying event, and a webpage displaying event.

6. The power saving method as claimed in claim 1 or 2, further comprising:
displaying a predetermined picture or a predetermined message(22) on the sensing area(11) after the first processing period.

7. A touch display apparatus(1) comprising:
a touch screen(10) comprising a sensing area(11);
a marking module(20) connected to the touch screen(10), used for marking a specific sensing area(21), wherein the specific sensing area(21) falls within the sensing area(11);
and
a scanning module(30) connected to the touch screen(10), used for scanning the sensing area(11) within a first processing period so as to determine whether an instruction event happens in the sensing area(11), and when it is determined that no instruction event happens within the first processing period, scanning the specific sensing area(21) within a second processing period so as to determine whether the instruction event happens in the specific sensing area(21), and
when it is determined that no instruction event happens in the specific sensing area(21) within the second processing period, ending the scanning of the sensing area(11).

8. The touch display apparatus(1) as claimed in claim 7, wherein when it is determined that the instruction event happens in the specific sensing area(21) within the second processing period, the scanning module(30) scans the sensing area(11) within the first processing period so as to determine whether the instruction event happens in the sensing area(11).

9. The touch display apparatus(1) as claimed in claim 7 or 8, further comprising;
a processing module(40) connected to the touch screen(10), used for determining whether an exception event occurs, wherein when it is determined that no exception event occurs, determining whether the instruction event happens in the sensing area(11) by scanning the sensing area(11) within the first processing period with the scanning module (30) .

10. The touch display apparatus(1) as claimed in claim 9, wherein the exception event is one of a set of a video displaying event, a document displaying event, a picture displaying event, and a webpage displaying event.

11. The touch display apparatus(1) as claimed in claim 7 or 8, wherein the marking module(20) displays a predetermined picture or a predetermined message(22) on the sensing area(11) after the first processing period.
